# EUROPEAN PATENT SPECIFICATION

(11) **EP 3 733 450 B1**
(45) Date of publication and mention of the grant of the patent: **05.01.2022**
(21) Application number: 19171906.1
(22) Date of filing: 30.04.2019
(51) Int. Cl.: B60N 2/90, F16K 11/02, F16K 7/18, F16K 1/36, F16K 31/02

(54) **VALVE FOR CONTROLLING PRESSURIZED AIR FLOW**
VENTIL ZUR STEUERUNG EINES DRUCKLUFTSTROMS
SOUPAPE DE COMMANDE D'ÉCOULEMENT D'AIR SOUS PRESSION

(43) Date of publication of application: 04.11.2020
(73) Proprietor: KA Group AG, 8004 Zurich (CH)
(72) Inventor: Dankbaar, Frank, 565 34 Mullsjö (SE); Grönhage, Anders, 565 32 Mullsjö (SE)
(74) Representative: Uexküll & Stolberg

(56) References cited:
- DE-U1-202017 104 440
- US-A- 3 547 157
- US-A- 4 413 651
- US-B2- 10 107 410

## Description

The present invention is directed to a Valve for controlling pressurized air flow to an inflatable air cell in a vehicle seat, comprising:
a housing enclosing a valve chamber communicating with a spigot for supplying pressurized air to the inflatable air cell and having an input opening in fluid communication with a pressurized air supply passageway and a venting opening for venting off air to the ambient atmosphere,
a moveable valve piston biased towards a valve seat formed at the input opening and configured to close the input opening when the valve piston is in abutment on the valve seat to block communication with the pressurized air supply passageway,
an actuator configured to, when activated by electric energy supply, pull the valve piston away from the valve seat to open the input opening to establish fluid communication from the pressurized air supply passageway to the valve chamber and the spigot, and
a venting control mechanism configured to close the venting opening in response to opening of the input opening by activation of the actuator and vice versa.

Drivers and passengers of motor vehicles, especially when driving long distances, often experience discomforts caused by long time static posture when seated in the vehicle seat. This is not only felt as being uncomfortable and causing for example back pain but may also lead to permanent impairment of health, in particular for professional drivers such as taxi, truck and bus drivers. To provide a remedy the automotive industries since some time offers vehicle seats with adjustable lumbar supports and bolsters, and in high end equipments with integrated massage systems in the backrests which are periodically inflated and deflated to provide a massage effect. The lumbar supports and bolsters in seats are adjusted by inflating air cells by supplying pressurized air to the air cells. Pressurized air supply is stopped and the air cells are closed (i.e. deflation is prevented) once the lumbar support or bolster reached its desired inflation state. In massage systems series of air cells in the backrest are sequentially inflated and deflated to provide a massage effect.

Such a massage system for a vehicle seat is for example disclosed in US 5 135 282 A. A series of air cells is disposed along a common supply line, the common supply line being supplied with pressurized air from a pump. In order to produce a propagating sequential inflation along that series of air cells starting from the first cell at the lower end of the seat back and continuing cell by cell to the last cell at the upper end of the seat, a number of controllable valves and a control unit are provided. In principle there is a controllable valve upstream of each air cell to permit to control the inflation and deflation of each cell individually. Since the number of air cells in a massage system is considerable, the number of valves for controlling air flow to air cells is correspondingly large. Similarly, in vehicle seats having adjustable lumbar supports and bolsters valves are present to control pressurized air supply to the air cells for inflation and to close the cells at the desired inflated state.

Solenoid valves are technically well suited to be utilized as controllable valves in massage system and in lumbar support and bolster systems for vehicle seats. A valve piston is urged by a spring so that a sealing surface of the valve piston is pressed onto a valve seat to block pressurized air supply to a valve chamber. By supplying electrical power to the solenoid the piston is, by electromagnetic action, lifted off the valve seat against the bias force and pressurized air is flowing through the valve chamber and to the associated air cell, and when the current supply stopped the valve piston is immediately returned by the spring force to its sealing position.

Another type of controllable valve is the so called SMA valve, wherein SMA stands for "shape memory alloy". A SMA valve comprises a housing, a valve piston, a spring urging the piston to a closed position in a valve seat, and an actuator capable of acting on the piston such that the actuator upon activation exerts a force on the piston which moves the piston away from the valve seat to an open position and keeps it there as long as the actuator remains activated. In this case the actuator comprises a metal wire made of a shape memory alloy, which SMA wire is connected to the piston and to a part fixed in the housing. Such shape memory alloy changes its microscopic structure at a threshold temperature such that a SMA wire shortens upon exceeding the threshold temperature. In particular, a SMA material is at room temperature in the state of a metal with martensitic properties, whereas the structure transitions at a threshold temperature of about 80°C into an austenitic structure. Due to this transition a SMA wire shortens, wherein the shortening provides the force acting on the piston to move it into the opened position. Actuation of the SMA valve is controlled by selectively supplying electric power to the SMA wire to heat it up to the threshold temperature and to keep it at such temperature for the desired activation cycle, whereafter electric power supply to the SMA wire is terminated to let the SMA wire cool down below the threshold temperature.

In principle other actuators instead of SMA wires can also be utilized for moving the valve piston, for example bi-metal stripes, small motors etc.

There are valves for controlling air flow to and from an air cell in a vehicle seat that are used to adjust the state of inflation of the air cell to adjust the contour shape, in particular in the backrest region, for example in adjustable lumbar supports. Such valves are capable of selectively controlling inflation and deflation. For this purpose they have more than one valve piston and actuator per air cell, one being used for supplying pressurized air to the air cell for inflation, and the another one for controlling venting off air from the air cell to the ambient atmosphere for deflation of the air cell. Usually a group of air cells shares a valve piston/actuator mechanism which controls deflation of all air cells of the group of air cells. For this reason the number of valve piston/actuator mechanisms is greater than the number of air cells but usually not twice as large because some air cells are grouped together to be commonly controlled for deflation. Such valve assemblies for selectively controlling inflation and deflation of an air cell are for example described in EP 3 281 821 A1. For such type of valve assembly it has been suggested in US 10 107 410 B2 to pneumatically separate an interior valve space, through which air flows during inflation or deflation, from an actuating space within the interior of the valve housing, in which actuating space the valve piston and the associated actuator are accommodated. The pneumatic separation is realized by rolling diaphragms which act as moveable, flexible partitions providing hermetic sealing against two chambers. In this case a rolling diaphragm comprises a central region which adapted to receive a top portion of a valve piston which is fixed to the diaphragm in its central portion. The diaphragm is turned in on itself when installed so that during the stroke of the valve piston, it rolls and unrolls alternately on the valve piston surface and a cylinder wall surrounding the valve piston. In the region of the rolling diaphragm between the diaphragm portion that is fitted over the top and part of the sides of the piston valve, and the diaphragm portion in abutment on the surrounding cylinder wall there is a semicircular "convolution" in the diaphragm that runs between the piston and the surrounding cylinder wall portion. As the piston moves back and forth, this convolution rolls with the valve piston. The outer perimeter edge of the rolling diaphragm is clamped around an inner opening of the valve housing such that a space in front of the inner opening which is closed by the rolling diaphragm is separated from the actuating space behind the inner opening in the valve housing in which the valve piston and the associated actuators are accommodated.

US 4 413 651 A discloses a valve which does not utilize a moveable piston and a valve seat to provide the valve function, but is based on a different valve mechanism which utilizes a rolling diaphragm. In particular a rolling diaphragm having a plurality of apertures is moved when a central member is moving in its longitudinal direction, wherein the rolling diaphragm is moved such that the openings are opened to an annular fluid passage, and thus the valve is opened, and to a closed position in which the openings face the inner wall of the outer member and are closed in this manner which establishes the closed state of the valve.

Another type of valve, typically used for applications such as massage systems in vehicle seats, is adapted to selectively inflate an air cell when it is activated, and to automatically deflate it when the valve is not activated; such valve is said to have a permanent deflate function. A valve of this kind can be implemented in a design with the single valve plunger, a single actuator and a single spigot in fluid communication with a valve chamber. The valve chamber has an input opening which communicates with a pressurized air supply passageway. The moveable valve piston is biased to be in abutment on a valve seat at the input opening to block communication with the pressurized air supply passageway. The actuator, when activated by electric energy supply, pulls the valve piston away from the valve seat to open the input opening so that pressurized air from the pressurized air supply passageway is flowing into the valve chamber and further into the spigot towards the air cell connected thereto. The valve chamber further has a venting opening which communicates with the ambient atmosphere. A venting control mechanism is configured to close the venting opening in response to opening of the input opening by activation of the actuator and vice versa, i.e. to open the venting opening in response to closing of the input opening by the valve plunger upon deactivation of the actuator. In other words the actuator and the venting control mechanism are adapted to alternately open of one of the input opening and the venting opening and to close the other of the input opening and the venting opening. To do so the actuator, when activated, pulls the valve piston away from the valve seat to open the valve chamber for input of pressurized air from the pressurized air supply passageway, and at the same time the venting control mechanism is cause by the activated actuator to close the venting opening so that the pressurized air supply is directed to spigot. On the other hand, upon deactivation of the actuator the valve piston is moved by the bias force to be in abutment on the valve seat to close the input opening, wherein the venting control mechanism in response to this opens at the same time the venting opening so that after a phase of inflation (with the actuator activated) a phase of deflation automatically follows once the actuator has been deactivated.

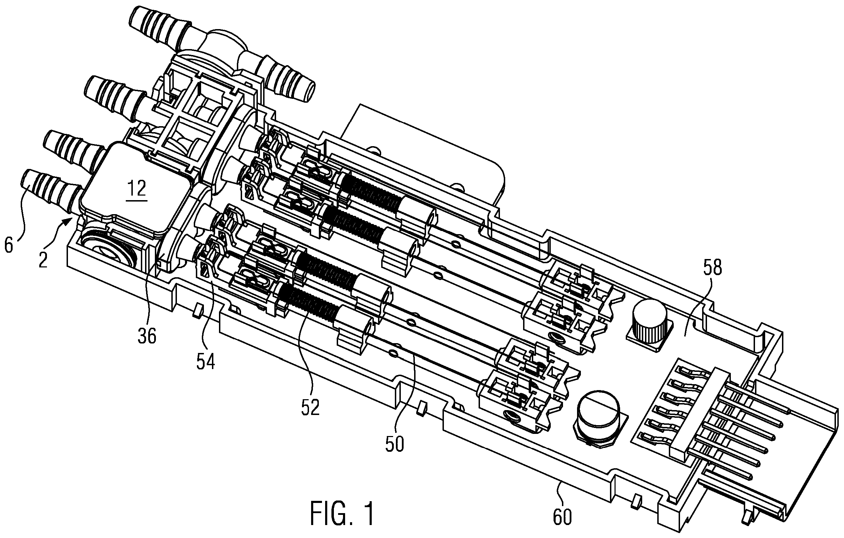

A valve the above described type is disclosed in DE 20 2017 104 440 U1, namely in the embodiment shown in and described in connection with Fig. 1B. The preamble of claim 1 is based on the embodiment of Fig. 1B of the document mentioned. The actuator comprises a SMA wire which is fixed with its two opposite ends to a mounting plate at spaced apart points, and is in its central portion fixed to the valve piston at a level elevated over the mounting plate such that the SMA wire has the shape of an isosceles triangle, wherein in the SMA wire portions extending from the central portion in opposite directions form the legs of equal length. When the SMA wire is heated up by supply of electrical power to above threshold temperature, the SMA wire shortens which results in shortening of the two legs of the triangle which in turn moves the apex with the SMA wire is connected to the valve piston closer to the mounting plate; in this manner the valve piston is moved to open the valve by allowing fluid communication between the pressurized air supply passage and the valve chamber and eventually to the spigot. The venting control mechanism comprises a mechanical link in the form of a pivoting lever which is supported in a region close to its centre to allow pivotal movements about its central supporting point. The end of one of the lever arms of the pivoting lever are mechanically linked to the valve piston, and the opposite lever arm is provided at its outer end with a sealing element arranged to close a venting opening when the pivoting lever, upon activation of the actuator, is pivoted. In contrast, when the actuator is deactivated and the valve piston is returned by bias force to abut on the valve seat at the input opening, the lever arm connected to the valve piston is pivoted back, thereby pivoting the opposite lever arm in opposite direction so that the sealing element at its outer end is lifted off the venting opening which is thus opened. In this manner the venting opening is alternately opened and closed upon the valve piston closing and opening the input opening, and vice versa.

This valve design is complex since it requires a mechanical force transmission by a pivoting lever. This on the one hand adds to manufacturing costs because a further separate component has to be manufactured and installed in a pivotal bearing which has to be provided for that purpose in the valve housing; in addition the pivoting lever has to be equipped with further elements for allowing its connection to the valve piston at one of its ends and has to be provided with an extra sealing plug at its opposite end.

It is an object of the present invention to provide a valve for controlling air flow to an air cell, wherein a permanent deflate function of the valve should be realized in a simpler manner and without need for mechanical force transmission links.

This object is achieved by the valve comprising the features of claim 1. Preferred embodiments of the invention are set out in the depended claims.

A valve for controlling pressurized air flow to an inflatable air cell comprising the features of the preamble of claim 1 is equipped according to the invention with a particular venting control mechanism. As mentioned above the venting control mechanism is adapted to, in cooperation with the actuator, alternately open the input opening of the valve chamber and close the venting opening, and vice versa to open the venting opening when the input opening is closed by deactivation of the actuator. The venting control mechanism comprises a rolling diaphragm which envelopes a top portion of the valve piston. The rolling diaphragm separates the valve chamber on one side of the rolling diaphragm from a space which is in fluid communication with the ambient atmosphere on the other side of the rolling diaphragm. The vent opening is formed as an opening through the rolling diaphragm, which opening is located on the rolling diaphragm such that, when the valve piston is, via a central head portion of the rolling diaphragm, in indirect abutment on the valve seat, the venting opening at least partly lies in a convolution area of the rolling diaphragm between the valve piston and a surrounding wall and thus is opened to the space in fluid communication with the ambient atmosphere. In contrast, when the valve piston has been pulled away from the valve seat by activation of the actuator, rolling of the rolling diaphragm caused movement of the convolution area along the rolling diaphragm and movement of the vent opening out of the area of the rolling diaphragm in fluid communication with the ambient atmosphere which effectively closed the vent opening with the respect to the valve chamber.

This venting control mechanism utilizing a rolling diaphragm to alternately open and close the venting opening of the valve chamber in response to closing and opening of the input opening is of very simple design on the one hand, but ensures safe and reliable operation on the other hand. In contrast to the prior art no force transmission by levers, and no bearings for a pivotal lever or the like are needed. The rolling diaphragm is flexibly rolling in the area of convolution upon valve piston movements which causes very little load on the rolling diaphragm such that the rolling diaphragm mechanism is not subject to any substantial tear and wear and thus ensures safe and reliable long term operation. In addition, rolling diaphragms withstand high pressures because of the way loads are distributed on them. A substantial part of the diaphragm surface area, in particular the front face of the central head portion of the rolling diaphragm, is supported by the piston top and thus a large part of the load caused by the fluid pressure is transmitted to the piston. The convolution area where the diaphragm is convoluted and turns from a sidewall of the piston to an opposite surrounding wall may be designed to be comparatively small to the area of the central head portion of the rolling diaphragm, and therefore the area of the diaphragm in the area convolution which is subject to the pressure difference between the valve chamber and the space in communication with the ambient atmosphere is comparatively small so that also the load on the diaphragm material because of the pressure difference between the valve chamber and the space in communication with the ambient atmosphere is comparatively small.

In a preferred embodiment the central head portion of the rolling diaphragm is adapted to receive the top portion of the valve piston and to be connected to it. From the central portion the rolling diaphragm extends further through an intermediate portion which extends along a sidewall of the valve piston, is turned around in the convolution area in which it turns radially away from the valve piston to a surrounding wall and further turns around to abut the surrounding wall up to an outer circumferentially extending edge region of the rolling diaphragm that is clamped around a piston opening of the valve chamber. The piston opening is an opening of the valve chamber that allows the valve piston to move further into or out of the valve chamber to cooperate with the input opening of the valve chamber to close or open it. In other words the rolling diaphragm separates the valve chamber on one side of the rolling diaphragm from a space on the opposite side of the rolling diaphragm which is in fluid communication with the ambient atmosphere. The venting opening is formed as an opening through the rolling diaphragm which is located such that, when the valve piston is, via the central head portion of the rolling diaphragm, in indirect abutment on the valve seat, the venting opening opens with at least part of its opening area in the convolution area of the rolling diaphragm between the valve piston and the surrounding wall, and thus is open to the space in fluid communication with the ambient atmosphere. The venting opening is arranged to ensure that, when the valve piston has been pulled away from the valve seat by activation of the actuator, the rolling action of the rolling diaphragm has moved the convolution area along the diaphragm so that the vent opening is no longer in this area of convolution and has moved out of the area of the rolling diaphragm in fluid communication with the ambient atmosphere. In this manner the opening of the input opening of the valve chamber has closed the venting opening since the venting opening has been moved out of the convolution area of the rolling diaphragm and thus out of contact with the space in fluid communication with the ambient atmosphere.

Opening of the input opening of the valve chamber and resulting closing of the venting opening occur vice versa in opposite direction when the actuator is deactivated which causes the valve piston to be moved back by bias force which brings the central head portion of the rolling diaphragm into abutment on the valve seat at the input opening. The movement of the valve piston causes the area of convolution to roll with the valve piston, with the effect that the venting opening is lying at least partly within the area of convolution again, and is thus opened to the space in fluid communication with the ambient atmosphere.

In a preferred embodiment a diaphragm retaining cap is provided which is adapted to be fixed to the housing to cover the piston opening of the valve chamber. The diaphragm retaining cap is adapted to clamp a circumferentially extending edge region of the rolling diaphragm between the housing and the diaphragm retaining cap to fix and keep the rolling diaphragm sealed over the piston opening of the valve chamber.

In a preferred embodiment the rolling diaphragm and the diaphragm retaining cap define the space in communication with the ambient atmosphere, and the diaphragm retaining cap is provided with an exhaust port to allow air to be vented off. In this design the space outside the diaphragm retaining cap, i.e. this space on the side of the diaphragm retaining cap opposite to the side enclosing the space in communication with the ambient atmosphere, is completely separated from any air flow during operation of the valve when pressurized air flow is controlled by the valve to inflate or deflate the air cell connected to the valve. Therefore, the actuator and its connection to the end portion of the piston projecting out of the diaphragm retaining cap are separated from any air flow; this is for example advantageous when the actuator is a SMA actuator in which case the SMA wire is protected against any influences from air flow, for example cooling caused by air flow.

In a preferred embodiment the diaphragm retaining cap is provided with a guide bushing protruding outwards from the diaphragm retaining cap when it is fixed to the housing, i.e. the guide bushing is projecting from a surface of the retaining cap which is opposite to the surface facing the enclosed space in communication with the ambient atmosphere. The guide bushing is configured to receive and guide the valve piston, wherein an end portion of the valve piston is projecting from the guide bushing to allow connection to the actuator. A central bore in the guide bushing slidable receives and guides the valve piston for linear movement.

In a preferred embodiment a common housing is partitioned to form a plurality of parallel adjacent housings, each including a valve chamber provided with an input opening, and an output opening to an associated spigot and a venting opening. Furthermore, a unitary rolling diaphragm arrangement is provided with a plurality of adjacent rolling diaphragms with central head portions received in the plurality of piston openings of the plurality of parallel valve chambers. A common diaphragm retaining cap is fixed to the housing and keeping the unitary diaphragm fixed in place and sealed.

In a preferred embodiment each rolling diaphragm is provided with at least two venting openings, wherein the venting openings are circumferentially distributed around the central head portion of the rolling diaphragm.

A preferred embodiment of the invention will now be described with reference to the drawings in which:
Fig. 1 shows a perspective view of a valve assembly including valves according to the invention, wherein an upper housing part of the valve assembly is removed;
Fig. 2 is an exploded view of the valve assembly of Fig. 1 without upper and lower valve assembly housing parts;
Fig. 3 shows on the left hand side an exploded view of the valve assembly of Figs. 1 and 2 including the valve assembly housing parts, and on the right hand side the valve assembly with upper and lower valve assembly housing parts in the assembled state;
Fig. 4 shows a perspective view of a valve module including two valve chambers, each for a valve according to the present invention;
Fig. 5 shows a perspective, exploded view of the valve module of Fig. 4;
Fig. 6 a) shows a cross-sectional view of the valve module of
Figs. 4 and 5;

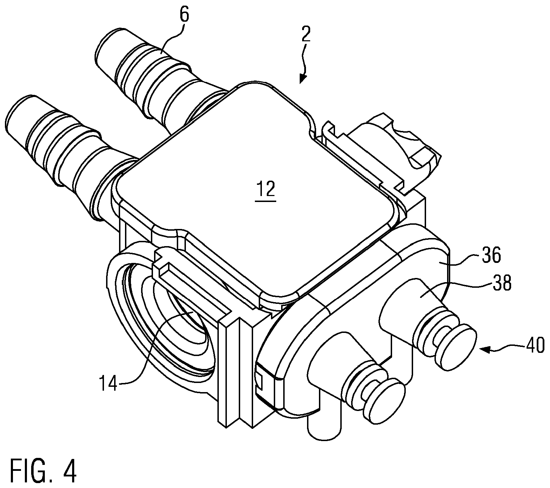

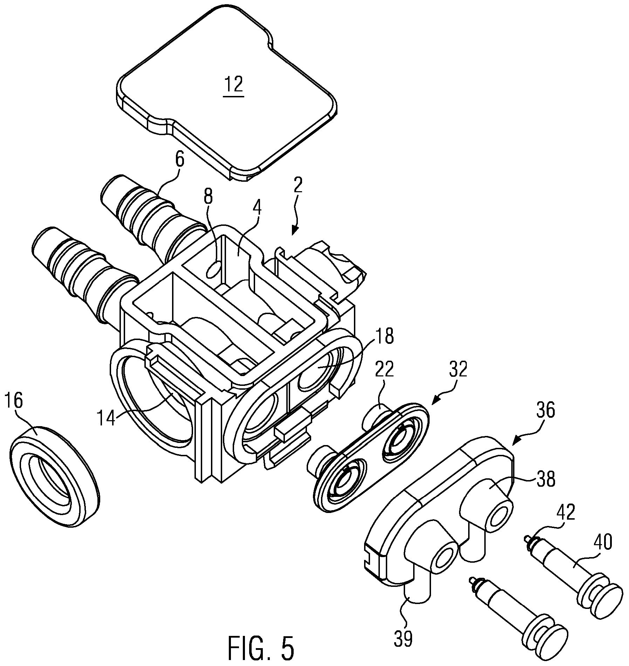

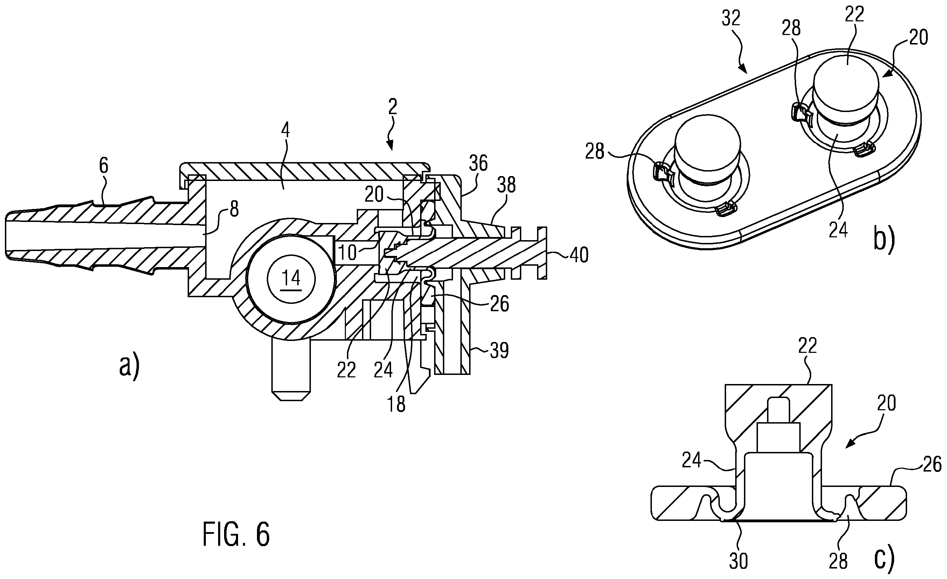

Fig. 6 b) shows a perspective view of a rolling diaphragm arrangement including two rolling diaphragms adjacent to each other which are utilized in the valve module of Figs. 4 and 5;
Fig. 6 c) shows a cross-sectional view of a single rolling diaphragm;

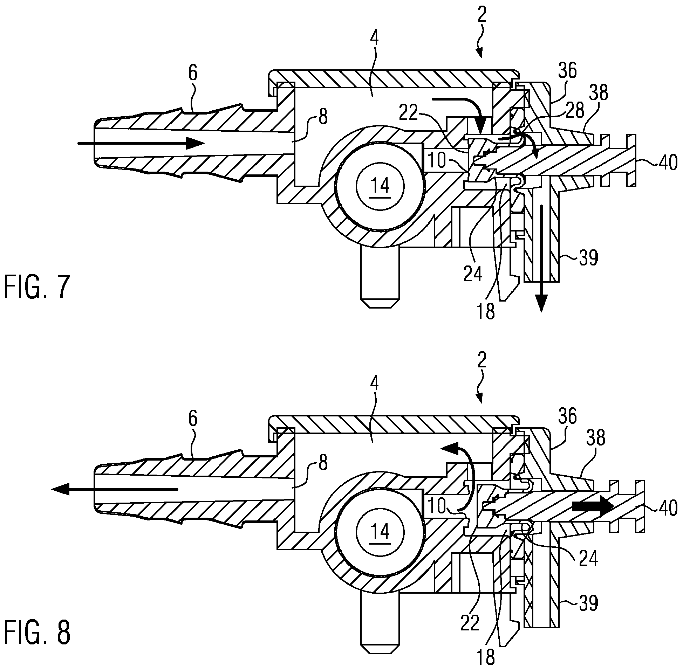

Fig. 7 shows a cross-sectional view of a valve module of Figs. 4 to 6 in a closed state illustrating air flow for deflation;
Fig. 8 shows a cross-sectional view of the valve module as in Fig. 7, but in an open state in which pressurized air flows through the valve chamber and through a spigot;

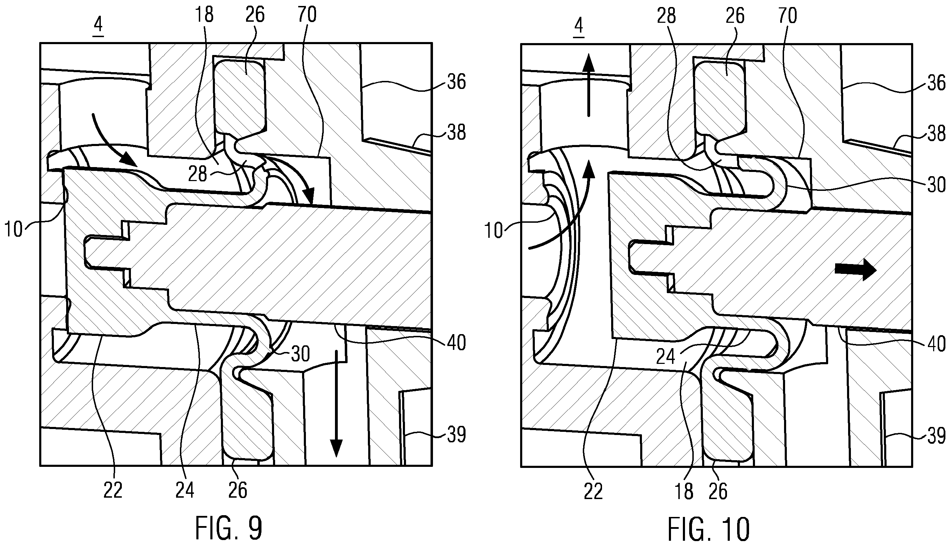

Fig. 9 shows an enlarged cross-sectional view of a detail of Fig. 7 illustrating air flow during deflation;
Fig. 10 shows an enlarged cross-sectional view of a detail of Fig. 8 illustrating air flow during inflation;

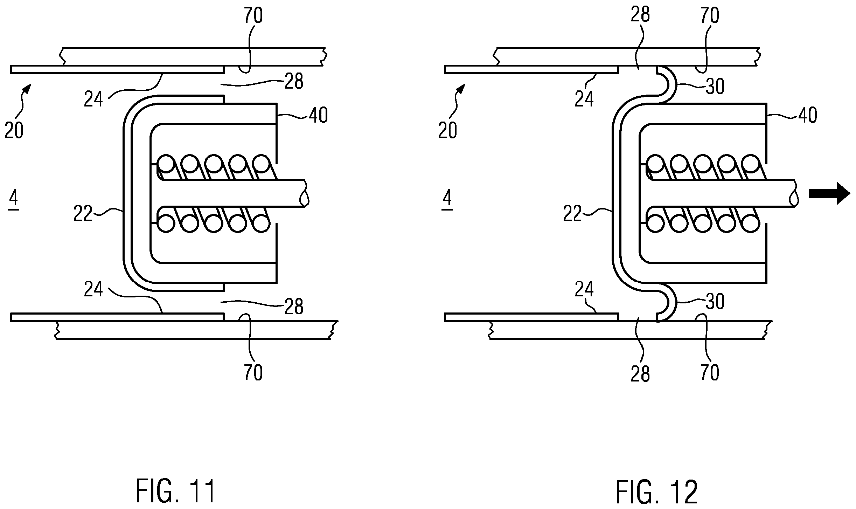

Fig. 11 shows a schematic cross-sectional view of a piston with a rolling diaphragm in a surrounding cylinder wall;
Fig. 12 shows a schematic cross-sectional view of the piston and rolling diaphragm as in Fig. 11, wherein the piston has been moved to the right hand side compared to Fig. 11; and

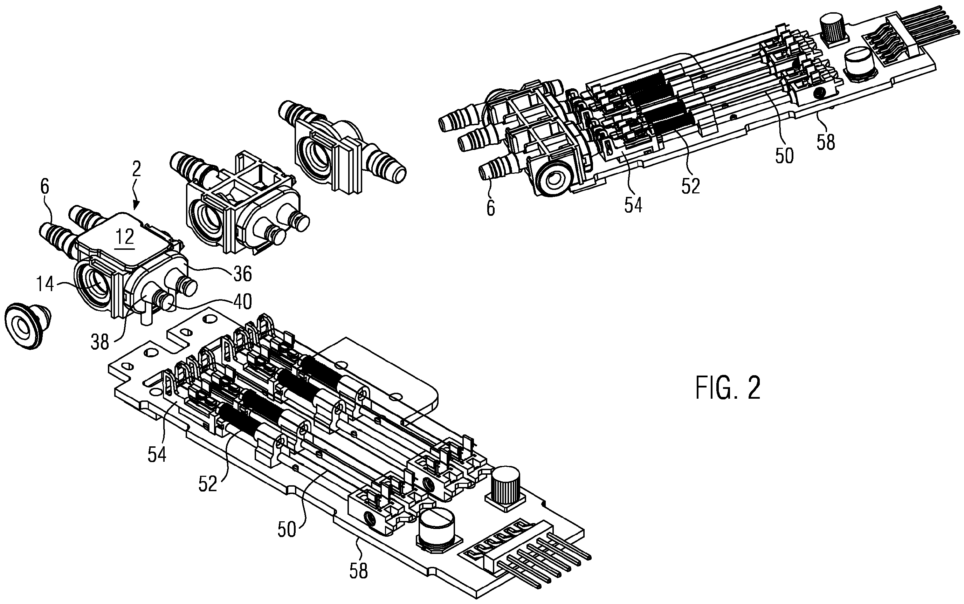

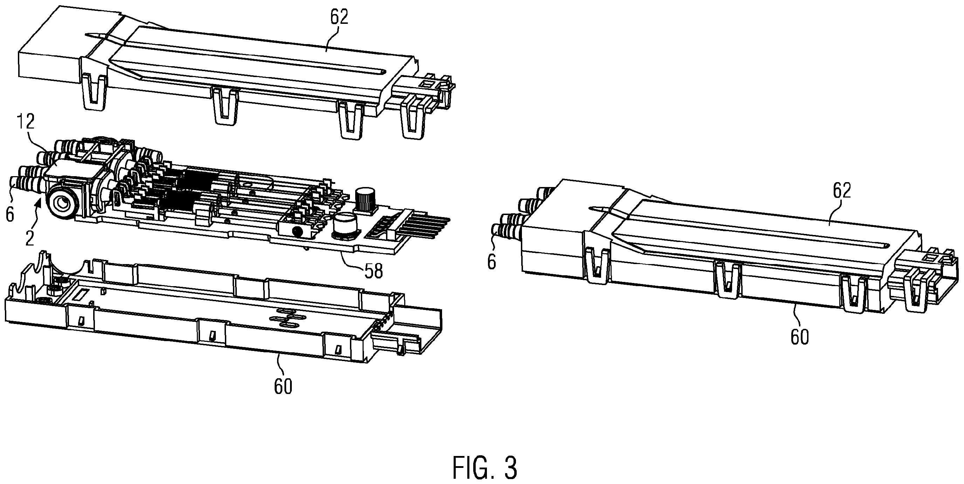

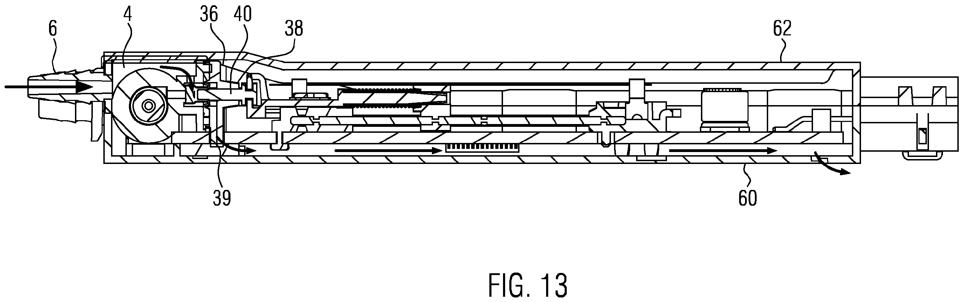

Fig. 13 shows a cross-sectional view of the valve assembly of Figs. 1 to 3, illustrating the air flow path during deflation.

In the following an overview over a valve assembly will first be given with reference to Figs. 1 to 3 showing a valve assembly for operating air cells in a vehicle seat. Fig. 1 shows a perspective view of a valve assembly with an upper valve assembly housing part removed. The valve assembly comprises several valves arranged in parallel, wherein housing 2 contains a valve module comprising two identical valve chambers for valves according to the present invention.

The valve assembly further comprises four parallel actuators 50 which are mounted on a common printed circuit board 58, wherein two actuators are associated with the two valve chambers in housing 2 of the valve module for valves according to the present invention, and the other two actuators are for a valve module of another type that will not be described further here. Each actuator 50 is formed as an SMA actuator, wherein reference numeral 50 points to the SMA wire of the actuator. The SMA wire is connected, for example by crimping, to a first rearward contact connected to the printed circuit board 58. From the first rearward contact the SMA wire extends forward, passes by a spring 52 of the actuator and is, in front of the spring 52 connected to a first forward contact which is carried by a sliding body 54 of the actuator. Extending further from the first forward contact the SMA wire is turned around 180° and then connected to a second forward contact, also carried by the sliding body 54. From there the SMA wire extends back to a second rearward contact next to the first rearward contact. The first and second forward contacts are electrically connected to each other so that current can flow from the first rearward contact through the SMA wire to the second rearward contact.

For activation of the actuator 50 electrical energy is supplied to the SMA wire to heat it up to a threshold temperature, thereby triggering a state transition of the SMA material causing shortening of the SMA wire. The sliding body 54 is slidably mounted with respect to the printed circuit board 58, wherein spring 52 is acting on the sliding body 54 to bias it into an extended position in which a piston 40 coupled to the sliding body 54 is pushed towards a valve seat at an input opening in a valve chamber to close the input opening, as will be described in further detail below. When the SMA wire of the actuator 50 is activated by electric energy supply and shortens, this shortening of the SMA wire pulls the sliding body 54 backwards against the bias force of the spring 52, thereby pulling the piston 40 coupled to the sliding body 54 backwards and away from the valve seat of the input opening to open the input opening for pressurized air flow into the valve chamber.

The design and operation of the valve will now be described with reference to Figs. 4 to 6. Fig. 4 shows a perspective view of a valve module comprising two identical valve chambers in a housing 2. As can be seen in the exploded view in Fig. 5 each valve comprises a valve chamber 4 having an output opening 8 communicating with a spigot 6. To each spigot 6 an air cell (not shown) can be connected, for example by a tube connected to the air cell and to spigot 6.

The valve module shown in Figs. 4 to 6 further comprises a pressurized air supply passageway 14 to which pressurized air is supplied, for example by a pump (not shown). Each valve chamber 4 is provided with an input opening 10 (see Fig. 6 a)) in fluid communication with the pressurized air supply passage 14. For each valve chamber 4 an associated valve piston 40 is provided. The valve piston 40 has a top portion 42 which is received in and enveloped by a central part of a rolling diaphragm 20. The top portion 42 of the valve piston 40 is fixed to a central head portion 22 of the rolling diaphragm 20.

As can be seen in Fig. 6 a) the input opening 10 of the valve chamber 4 is normally closed by the valve piston 40 which presses the central head portion 22 of the rolling diaphragm 20 in a valve seat around the input opening 10 to close this input opening. The force for closing the input opening 10 is exerted on the piston 40 by the spring 52 which acts between a support part fixed with respect to the printed circuit board 58 and the sliding body 54. The sliding body 54 is coupled to a rearward end portion of the piston 40 by coupling elements of the sliding body 54 engaging a circumferential groove at the rearward end of the piston 40.

The rolling diaphragm extends from the central head portion 22 through an intermediate portion 24 (see Fig. 6 c)) which runs along a part of the side wall of the valve piston 40, is then turning around by 180° in an convolution area 30 which is semicircular in the cross-sectional view, and then extends further to a circumferentially extending edge region 26 which is clamped between an outer wall portion of housing 2 around a piston opening 18 in the housing 2 and a diaphragm retaining cap 36, as can be seen in Fig. 6 a). The diaphragm retaining cap 36 is fixed to the housing 2 to enclose a space adjoining the piston opening 18 of the housing 2, which piston opening 18 allows piston 40 to extend into the interior of the valve chamber 2 to thereby press the central head portion of the rolling diaphragm against the valve seat around the input opening 10. In this manner the rolling diaphragm is fixed and sealed by clamping the circumferentially extending edge region 26 of the rolling diaphragm between the outer wall of the housing 2 and the inner wall of the diaphragm retaining cap 36. The rolling diaphragm separates the valve chamber 4 to which the rolling diaphragm 20 is exposed with one of its two opposite surfaces from a space which is in fluid communication with the ambient atmosphere, to which space the rolling diaphragm 20 is exposed with its opposite side. This space in fluid communication with the ambient atmosphere is an annular space in the interior of the diaphragm retaining cap 36 and around the piston 40 extending therethrough, and is in fluid communication with the ambient atmosphere by communicating with an exhaust port 39 of the diaphragm retaining cap 36.

As can be seen in Fig. 6 b) each rolling diaphragm 20 is provided with venting openings 28 extending therethrough which are located in the convolution area 30 of the rolling diaphragm when the rolling diaphragm and the piston 40 are in the closed state in which the central head portion 22 of the rolling diaphragm is pressed against the valve seat around the input opening 10 to close it.

To explain the function and way of operation of the venting openings 28 in the rolling diaphragm 20 reference is now made to the schematic views of Figs. 11 and 12 illustrating such rolling diaphragm mechanism in a simplified manner.

Fig. 11 shows a rolling diaphragm 20 with a central head portion 22 thereof attached to the front face of a piston 40. In contrast to the rolling diaphragm 20 in Fig. 6 b) which has three venting opening 28 separated by 120°, the rolling diaphragm 20 of Fig. 11 has two diametrically opposite venting openings 28 through which the cross-sectional view of Fig. 11 is taken such that the rolling diaphragm presents venting openings 28 in the cross-sectional view of Fig. 11 where otherwise the convolution area would be located; it should be noted that any other cross-sectional view in a plane rotated about the central axis of the piston 40 would show a semicircular convolution area between the diaphragm on the side wall piston 40 and the diaphragm on the inner wall of the surrounding wall 70. The rolling diaphragm is not attached to the side wall of the piston 40 or to the inner wall of this surrounding wall 70, but is only fixed to the front face of the piston 40 and fixed or clamped at an outer edge to the surrounding wall 70.

In the state of Fig. 11 the venting openings 28 are located in the convolution area of the rolling diaphragm and thus allow fluid communication through the venting openings 28 of the rolling diaphragm.

When the piston 40 is moved the convolution area 30 rolls along the side wall of the piston 40, as can be seen in Fig. 12 in which piston 40 as been moved to the right hand side compared to Fig. 11 which caused a movement of the convolution area 30 closer to the front face of piston 40. On the other hand, this rolling of the convolution area 30 also has the effect that the venting openings 28 have moved away from the convolution area 30 and are now in the area in abutment on the surrounding wall 70. In this state the venting openings 28 no longer provide a communication path from the valve chamber 4 on the left hand side of the piston 40 past the piston 40 since the venting openings 28 do not have contact to the space between the side wall of the piston 40 and the surrounding wall 70. Therefore, the venting openings 28, which are open and allow fluid communication between valve chamber 4 and the space on the right hand side of the piston 40 in the state of Fig. 11, have effectively been closed by moving the piston 40 to the right hand side to the state of Fig. 12 in which the rolling of the rolling diaphragm 20 along the piston 40 caused that the venting openings 28 have been moved out of the convolution area 30, thereby effectively closing the venting openings 28 so that the valve chamber space 4 on the left side of the rolling diaphragm has no more fluid communication with the space on the right hand side of the rolling diaphragm 20.

The air flow during deflation and inflation of an associated air cell will now described with reference to Figs. 7 and 8. Fig. 7 illustrates the state in which the piston 40 is biased to the closed state in which the central head portion 22 which is attached to the top portion 42 of the piston 40 is pressed against the valve seat around input opening 10 of the valve chamber 4. In this closed state the input opening 10 for pressurized air is closed, and the venting openings 28 of the rolling diaphragm 20 are located in the convolution area 30 of the rolling diaphragm, and are thus open for fluid communication (comparable to the state shown in Fig. 11) from the valve chamber 4 to the exhaust port 39.

Fig. 9 shows an enlarged view of a detail of Fig. 7 in the region of the rolling diaphragm around the piston 40. As shown in Fig. 7 and 9 the valve allows in the closed state air to flow from an air cell (not shown) connected to the spigot 6, into the valve chamber 4, and from the valve chamber through the venting openings 28 of the rolling diaphragm into an annular space in the interior of the diaphragm retaining cap 36, around the piston 40 and further through an inner channel of the exhaust port 39 to the ambient atmosphere. Thus, in the closed state the valve provides for a permanent deflate function, i.e. air is deflated from a connected air cell until the air cell is deflated. On the other hand, the input opening 10 of the valve chamber 4 is in the state of Figs. 7 and 9 closed by the central head portion 22 of the rolling diaphragm which is pressed by the top portion 42 of the piston 40 onto the valve seat around the input opening 10.

Fig. 8 and the enlarged detail of Fig. 10 show the open state of the valve in which the piston 40 has been pulled backwards by activation of the actuator so that the central head portion 22 of the rolling diaphragm has been lifted of the valve seat around the input opening 10 of the valve chamber 4. In this state pressurized air from the pressurized air supply passageway 14 flows through the input opening 10 into the valve chamber 4, and further through the output opening 8 into the spigot 6 and from there into an air cell (not shown). Due to the movement of the valve piston 40 to the right hand side the convolution area 30 of the rolling diaphragm has been rolled along the side wall of the piston 40 so that the convolution area 30 is located closer to the central head portion 22 compared to the closed state of Fig. 9. This rolling movement of the convolution area 30 during the transition from the state of Fig. 9 to the state of Fig. 10 also caused that the venting opening 28 which in the state of Fig. 9 at least partly extended into the convolution area 30 to provide for fluid communication through the rolling diaphragm has been moved out of the convolution area 30 so that the venting opening 28 does not allow communication with the space in the interior of the diaphragm retaining cap 36 which is in fluid communication with the exhaust port 39. Therefore, opening the input opening 10 of the valve chamber 4 by pulling the piston 40 away from the valve seat to the right hand side in Fig. 10 effectively closed the venting openings 28 of the rolling diaphragm so that the entire pressurized air flowing into the valve chamber 4 from the input opening 10 is directed to the spigot 6 and no leakage of the pressurized air through the venting openings 28 can take place.

As shown in Fig. 9 rolling diaphragm is provided with an annular ridge which is located in the centre of the convolution area 30 in the state of Fig. 9; actually reference numeral 30 designating the convolution area is also pointing to this ridge in Fig. 9. Due to the rolling of the convolution area when the piston is moved to the pulled back state in Fig. 10 the ridge is in Fig. 10 located in an area in abutment on the surrounding wall 70 and is in this position intended to improve the sealing between rolling diaphragm and surrounding wall.

As can be seen in Fig. 5 the housing 2 of the valve module including valve chambers 4 of two valves is provided with a piston input opening 18 for each valve chamber 4, which input opening allows that top portion 42 which is received in and fixed to a central head portion 22 of the rolling diaphragm 20 is introduced into the interior of the valve chamber 4. For the valve module with two parallel valve chambers 4 in this embodiment there is a unitary rolling diaphragm arrangement 32 having two rolling diaphragms 20 arranged adjacent to each other. This unitary rolling diaphragm arrangement 32 is placed such that it abuts against outer wall portions of the housing 2 around the piston openings 18, while the central head portions 22 of the unitary rolling diaphragm arrangement 32 are received in the piston openings 18. The unitary rolling diaphragm arrangement is held fixed in place by the diaphragm retaining cap 36 which is attached to the housing 2 to cover and enclose the unitary rolling diaphragm arrangement 32. In addition, the diaphragm retaining cap 36 is arranged such that an inner wall portion thereof clamps a circumferentially extending edge region 26 of the unitary rolling diaphragm arrangement 32 between an inner wall portion of the diaphragm retaining cap 36 and an opposite wall portion of the housing 2 such that the rolling diaphragm arrangement 32 is fixed and sealed. In this manner the rolling diaphragm arrangement separates, when the venting openings 28 are closed, regions in communication with the air chambers 4 from an interior space between inner wall portions of the diaphragm retaining cap 36 and the rolling diaphragm arrangement 32.

In the embodiment of Fig. 5 the diaphragm retaining cap 36 is provided with a guide bushing 38 for each piston 40. Each guide bushing 38 has a through-going inner bore adapted for receiving and slidable guiding movement of the piston 40 in its axial direction.

Fig. 13 shows a cross-sectional view of the valve assembly of Figs. 1 to 3, illustrating the air flow path during deflation. The vented off air from the air cell is discharged by exhaust port 39 as described above. The outlet opening of the exhaust port 39 is located below the printed circuit board where a flow channel is formed which is enclosed by the printed circuit board and the lower valve assembly housing part 60. Through this flow channel vented off air is flowing to an opening close to the rear end of lower valve assembly housing part 60 where it exits to the atmosphere. In this manner the space above the printed circuit board accommodating the actuators is completely separated from air flow caused by the valves during inflation and deflation.

### Reference numerals:

- 2: housing
- 4: valve chamber
- 6: spigot
- 8: output opening to spigot
- 10: input opening
- 12: lid
- 14: pressurized air supply passageway
- 16: O-ring sealing
- 18: piston opening
- 20: rolling diaphragm
- 22: head portion
- 24: intermediate portion
- 26: circumferential sealing body (for clamping)
- 28: venting opening
- 30: convolution
- 32: rolling diaphragm arrangement
- 36: diaphragm retaining cap
- 38: guide bushing
- 39: exhaust port
- 40: valve piston
- 42: top portion of the piston
- 50: actuator
- 52: spring
- 54: sliding body
- 58: printed circuit board
- 60: lower valve assembly housing part
- 62: upper valve assembly housing part
- 70: surrounding wall

## Claims

1. Valve for controlling pressurized air flow to an inflatable air cell in a vehicle seat, comprising:
a housing (2) enclosing a valve chamber (4) communicating with a spigot (6) for supplying pressurized air to the inflatable air cell and having an input opening (10) in fluid communication with a pressurized air supply passageway (14), and a venting opening (28) for venting off air to the ambient atmosphere;
a moveable valve piston (40) biased towards a valve seat formed at the input opening (10) and configured to close the input opening when the valve piston is in abutment on the valve seat to block communication with the pressurized air supply passageway (14);
an actuator (50) configured to, when activated by electric energy supply, pull the valve piston (40) away from the valve seat to open the input opening (10) to establish fluid communication from the pressurized air supply passageway (14) to the valve chamber (4) and the spigot (6); and
a venting control mechanism (20, 50) configured to close the venting opening (28) in response to opening of the input opening (10) by activation of the actuator (50) and vice versa;
**characterized in that** the venting control mechanism comprises a rolling diaphragm (20) which envelopes a top portion (42) of the valve piston (40) and which separates the valve chamber (4) from a space which is in fluid communication with the ambient atmosphere, and **in that** the vent opening (28) is formed as an opening through the rolling diaphragm (20) located such that, when the valve piston (40) is, via a central head portion (22) of the rolling diaphragm, in indirect abutment on the valve seat, the venting opening (28) at least partly lies in a convolution area (30) of the rolling diaphragm between the valve piston (40) and a surrounding wall (60) and is thus open to the space in fluid communication with the ambient atmosphere, whereas, when the valve piston (40) has been pulled away from the valve seat by activation of the actuator (50), the convolution area (30) has moved along the rolling diaphragm and the vent opening (28) has moved out of the area of the rolling diaphragm in fluid communication with the ambient atmosphere.

2. Valve for controlling pressurized air flow according to claim 1, **characterized in that** the central head portion (22) has a cup shape presenting a flat front surface, the interior of the central head portion (22) being adapted to receive the top portion (42) of the valve piston (40) and to be connected thereto, whereas the rolling diaphragm (20) extends from the central head portion (22) through an intermediate portion (24) of diaphragm, which intermediate portion extends along a portion of a sidewall of the valve piston, is turned around in the convolution area (30) and extends in abutment on the surrounding wall (70) further to an outer circumferentially extending edge region (26) which is clamped around a piston opening (18) of the valve chamber (4).

3. Valve for controlling pressurized air flow according to any of the preceding claims, **characterized in that** the rolling diaphragm (20) is held in place by a diaphragm retaining cap (36) which is adapted to be fixed to the housing (2) to enclose the piston opening (18) of the valve chamber (4) and which is adapted to clamp a circumferentially extending edge region (26) of the rolling diaphragm between the housing (2) and the diaphragm retaining cap (36) to keep the rolling diaphragm (20) sealed over the piston opening of valve chamber (4).

4. Valve for controlling pressurized air flow according to claim 3, **characterized in that** the rolling diaphragm (20) and the diaphragm retaining cap (36) enclose the space in communication with the ambient atmosphere, and that the diaphragm retaining cap (36) is provided with an exhaust port (39) from that enclosed space providing communication with the ambient atmosphere.

5. Valve for controlling pressurized air flow according to claim 3 or 4, **characterized in that** the diaphragm retaining cap (36) is provided with a guide bushing (38) protruding outwards from the diaphragm retaining cap (36) when it is fixed to the housing (2), the guide bushing (38) being configured to receive and guide the valve piston (40), wherein an end portion of the valve piston (40) is projecting from the guide bushing (36) to allow connection to the actuator (50).

6. Valve for controlling pressurized air flow according to any of the claims 3 to 5, **characterized in that** a common housing is partitioned into a plurality of housings, each including a valve chamber (4) provided with an input opening (10), and output opening (8) to an associated spigot (6) and a venting opening (28), and **in that** a unitary diaphragm (32) is provided with a plurality of adjacent rolling diaphragms (20) with central head portions (22) received in the plurality of piston openings of the plurality of parallel valve chambers (4), and **in that** a common diaphragm retaining cap (36) is keeping the unitary diaphragm fixed and sealed in place.

7. Valve for controlling pressurized air flow according to any of the preceding claims, **characterized in that** at least two venting openings (28) are provided for the rolling diaphragm (20), which venting openings (28) are circumferentially distributed around the central head portion (22) of the rolling diaphragm (20).

## Patentansprüche

1. Ventil zum Steuern von Druckluftfluss zu einer aufblasbaren Luftzelle in einem Fahrzeugsitz mit:
einem Gehäuse (2), das eine Ventilkammer umschließt, die mit einem Stutzen (6) zur Zufuhr von Druckluft zu der aufblasbaren Luftzelle kommuniziert, und das eine Einlassöffnung in Durchflussverbindung mit einem Druckluftzufuhrkanal (14) und eine Entlüftungsöffnung (28) zum Entlüften von Luft in die umgebende Atmosphäre aufweist,
einem beweglichen Ventilkolben (40) der zu einem an der Einlassöffnung (10) gebildeten Ventilsitz hin vorgespannt ist und der dazu ausgestaltet ist, die Einlassöffnung zu schließen, wenn der Ventilkolben in Anlage am Ventilsitz ist, um die Verbindung mit dem Druckluftzufuhrkanal (14) zu blockieren,
einem Aktuator (50), der dazu ausgestaltet ist, wenn er durch Zufuhr elektrischer Energie aktiviert wird, den Ventilkolben von dem Ventilsitz wegzuziehen, um die Einlassöffnung (10) zu öffnen zur Herstellung von Durchflussverbindung von dem Druckluftzufuhrkanal (14) zu der Ventilkammer (4) und dem Stutzen (6), und
einem Entlüftungssteuermechanismus (20, 50), der dazu ausgestaltet ist, um die Entlüftungsöffnung (28) in Reaktion auf die Öffnung der Einlassöffnung (10) durch Aktivierung des Aktuators (50) zu schließen und umgekehrt,
**dadurch gekennzeichnet, dass** der Entlüftungssteuermechanismus eine Rollmembran (20) aufweist, die einen Spitzenbereich (42) des Ventilkolbens (40) umhüllt und die die Ventilkammer (4) von einem Raum trennt, der in Durchflussverbindung mit der umgebenden Atmosphäre steht, und dass die Entlüftungsöffnung (28) als eine Öffnung durch die Rollmembran (20) gebildet ist, die so angeordnet ist, dass, wenn der Ventilkolben (40) über einen zentralen Kopfbereich (22) der Rollmembran in indirekter Anlage am Ventilsitz ist, die Entlüftungsöffnung (28) wenigstens teilweise in einem Rollbereich (30) der Rollmembran zwischen dem Ventilkolben (40) und einer umgebenden Wand (60) liegt und daher gegenüber dem Raum in Durchflussverbindung mit der umgebenden Atmosphäre offen ist, wohingegen, wenn der Ventilkolben (40) durch Aktivierung des Aktuators (50) von dem Ventilsitz weggezogen ist, der Rollbereich (30) sich entlang der Rollmembran bewegt hat und die Entlüftungsöffnung (28) aus dem Gebiet der Rollmembran in Durchflussverbindung mit der umgebenden Atmosphäre heraus bewegt ist.

2. Ventil zum Steuern von Druckluftfluss gemäß Anspruch 1, **dadurch gekennzeichnet, dass** der zentrale Kopfbereich eine Becherform hat, die eine flache Stirnfläche bietet, wobei das Innere des zentralen Kopfbereichs (22) dazu ausgestaltet ist, um den Spitzenbereich (42) des Ventilkolbens (40) aufzunehmen und damit verbunden zu sein, während die Rollmembran (20) von dem zentralen Kopfbereich (22) über einen mittleren Bereich (24) der Membran verläuft, wobei der mittlere Bereich sich entlang eines Bereichs einer Seitenwand des Ventilkolbens erstreckt, und sich in dem Rollbereich (30) umwendet und weiter in Anlage an der umgebenden Wand (70) bis zu einer äußeren in Umfangsrichtung ausgedehnten Randregion (26) verläuft, die um eine Kolbenöffnung (18) der Ventilkammer (4) herum eingeklemmt ist.

3. Ventil zum Steuern von Druckluftfluss gemäß einem der vorhergehenden Ansprüche, **dadurch gekennzeichnet, dass** die Rollmembran (20) durch eine Membranhaltekappe (36) am Platz gehalten wird, die dazu ausgestaltet ist, an dem Gehäuse (2) befestigt zu werden, um die Kolbenöffnung (18) der Ventilkammer (4) zu schließen, und die dazu ausgestaltet ist, eine sich in Umfangsrichtung erstreckende Randregion (26) der Rollmembran zwischen dem Gehäuse (2) und der Membranhaltekappe (36) einzuklemmen, um die Rollmembran (20) abgedichtet über der Ventilöffnung der Ventilkammer (4) zu halten.

4. Ventil zum Steuern von Druckluftfluss gemäß Anspruch 3, **dadurch gekennzeichnet, dass** die Rollmembran (20) und die Membranhaltekappe (36) den Raum in Verbindung mit der umgebenden Atmosphäre umschließen und dass die Membranhaltekappe (36) mit einer Auslassstutzen (39) versehen ist, durch den der umschlossene Raum Verbindung mit der umgebenden Atmosphäre bietet.

5. Ventil zum Steuern von Druckluftfluss nach Anspruch 3 oder 4, **dadurch gekennzeichnet, dass** die Membranhaltekappe (36) mit einer Führungshülse (38) versehen ist, die von der Membranhaltekappe (36), wenn sie an dem Gehäuse (2) befestigt ist, nach außen vorsteht, wobei die Führungshülse (38) dazu ausgestaltet ist, den Ventilkolben (40) aufzunehmen und zu führen, wobei ein Endbereich des Ventilkolbens (40) aus der Führungshülse (36) heraus vorsteht, um die Verbindung mit dem Aktuator (50) zu ermöglichen.

6. Ventil zum Steuern von Druckluftfluss gemäß einem der Ansprüche 3-5, **dadurch gekennzeichnet, dass** ein gemeinsames Gehäuse in eine Mehrzahl von Gehäusen unterteilt ist, wobei jedes Gehäuse eine Ventilkammer aufweist, die mit einer Einlassöffnung (10) und einer Auslassöffnung (8) zu einem zugehörigen Stutzen (6) und einer Entlüftungsöffnung (28) versehen ist, und dass eine einstückige Membran (32) mit einer Mehrzahl von benachbarten Rollmembranen (20) mit zentralen Kopfbereichen (22) versehen ist, die in der Mehrzahl von Kolbenöffnungen der Mehrzahl von parallelen Ventilkammern (4) aufgenommen sind, und dass eine gemeinsame Membranhaltekappe (36) die einstückige Membran fixiert und abgedichtet am Platz hält.

7. Ventil zum Steuern von Druckluftfluss gemäß einem der vorhergehenden Ansprüche, **dadurch gekennzeichnet, dass** wenigstens zwei Entlüftungsöffnungen (28) an der Rollmembran (20) vorgesehen sind, wobei die Entlüftungsöffnungen (28) in Umfangsrichtung verteilt um den zentralen Kopfbereich (22) der Rollmembran (20) angeordnet sind.

## Revendications

1. Vanne de régulation d'écoulement d'air comprimé vers une cellule à air gonflable dans un siège de véhicule, comprenant :
un boîtier (2) enfermant une chambre de vanne (4) communiquant avec un embout mâle (6) pour apporter de l'air comprimé à la cellule à air gonflable et présentant une ouverture d'entrée (10) en communication fluidique avec un passage d'alimentation en air comprimé (14), et une ouverture d'évacuation (28) pour évacuer l'air dans l'atmosphère ambiant ;
un piston de vanne mobile (40) sollicité vers un siège de vanne formé au niveau de l'ouverture d'entrée (10) et configuré pour fermer l'ouverture d'entrée lorsque le piston de vanne est en butée sur le siège de vanne pour bloquer la communication avec le passage d'alimentation en air comprimé (14) ;
un actionneur (50) configuré pour, lorsqu'il est activé par un apport d'énergie électrique, tirer le piston de vanne (40) loin du siège de vanne afin d'ouvrir l'ouverture d'entrée (10) pour établir une communication fluidique depuis le passage d'alimentation en air comprimé (14) vers la chambre de vanne (4) et l'embout mâle (6) ; et
un mécanisme de régulation d'évacuation (20, 50) configuré pour fermer l'ouverture d'évacuation (28) en réponse à l'ouverture de l'ouverture d'entrée (10) par l'activation de l'actionneur (50) et vice versa ;
**caractérisée en ce que** le mécanisme de régulation d'évacuation comprend un diaphragme à enroulement (20) qui enveloppe une portion supérieure (42) du piston de vanne (40) et qui sépare la chambre de vanne (4) d'un espace qui est en communication fluidique avec l'atmosphère ambiante, et **en ce que** l'ouverture d'évacuation (28) est formée en tant qu'ouverture à travers le diaphragme à enroulement (20) située de telle sorte que, lorsque le piston de vanne (40) est, via une portion tête centrale (22) du diaphragme à enroulement (20), en butée indirecte sur le siège de vanne, l'ouverture d'évacuation (28) repose au moins partiellement dans une zone de convolution (30) du diaphragme à enroulement entre le piston de vanne (40) et une paroi environnante (60) et est ainsi ouverte sur l'espace en communication fluidique avec l'atmosphère ambiante, alors que, lorsque le piston de vanne (40) a été tiré loin du siège de vanne par l'activation de l'actionneur (50), la zone de convolution (30) s'est déplacée le long du diaphragme à enroulement et l'ouverture d'évacuation (28) s'est déplacée hors de la zone du diaphragme à enroulement en communication fluidique avec l'atmosphère ambiant.

2. Vanne de régulation d'écoulement d'air comprimé selon la revendication 1, **caractérisée en ce que** la portion tête centrale (22) présente une forme de coupe présentant une surface avant plate, l'intérieur de la portion tête centrale (22) étant adapté pour recevoir la portion supérieure (42) du piston de vanne (40) et pour y être relié, alors que le diaphragme à enroulement (20) s'étend depuis la portion tête centrale (22) à travers une portion intermédiaire (24) de diaphragme, laquelle portion intermédiaire s'étend le long d'une portion d'une paroi latérale du piston de vanne, est retournée dans la zone de convolution (30) et s'étend en butée sur la paroi environnante (70) davantage vers une région de bord extérieur s'étendant circonférentiellement (26) qui est serrée autour d'une ouverture de piston (18) de la chambre de vanne (4).

3. Vanne de régulation d'écoulement d'air comprimé selon l'une quelconque des revendications précédentes, **caractérisée en ce que** le diaphragme à enroulement (20) est maintenu en place par un capuchon de maintien de diaphragme (36) qui est adapté pour être fixé au boîtier (2) afin d'enfermer l'ouverture de piston (18) de la chambre de vanne (4) et qui est adapté pour serrer une région de bord s'étendant circonférentiellement (26) du diaphragme à enroulement entre le boîtier (2) et le capuchon de maintien de diaphragme (36) afin de garder le diaphragme à enroulement (20) scellé par-dessus l'ouverture de piston de chambre e vanne (4).

4. Vanne de régulation d'écoulement d'air comprimé selon la revendication 3, **caractérisée en ce que** le diaphragme à enroulement (20) et le capuchon de maintien de diaphragme (36) enferment l'espace en communication avec l'atmosphère ambiant, et que le capuchon de maintien de diaphragme (36) est pourvu d'un orifice d'échappement (39) de cet espace enfermé fournissant une communication avec l'atmosphère ambiant.

5. Vanne de régulation d'écoulement d'air comprimé selon la revendication 3 ou 4, **caractérisée en ce que** le capuchon de maintien de diaphragme (36) est pourvu d'une douille de guidage (38) faisant saillie vers l'extérieur depuis le capuchon de maintien de diaphragme (36) lorsqu'il est fixé au boîtier (2), la douille de guidage (38) étant configurée pour recevoir et guider le piston de vanne (40), dans laquelle une portion d'extrémité du piston de vanne (40) se projette depuis la douille de guidage (36) pour permettre un raccordement à l'actionneur (50).

6. Vanne de régulation d'écoulement d'air comprimé selon l'une quelconque des revendications 3 à 5, **caractérisée en ce qu'**un boîtier commun est séparé en une pluralité de boîtiers, chacun incluant une chambre de vanne (4) pourvue d'une ouverture d'entrée (10), et d'une ouverture de sortie (8) sur un embout mâle (6) associé et une ouverture d'évacuation (28), et **en ce qu'**un diaphragme unitaire (32) est pourvu d'une pluralité de diaphragmes à enroulement (20) adjacents avec des portions têtes centrales (22) reçues dans la pluralité d'ouvertures de piston de la pluralité de chambres de vanne (4) parallèles, et **en ce qu'**un capuchon de maintien de diaphragme (36) garde le diaphragme unitaire fixe et scellé en place.

7. Vanne de régulation d'écoulement d'air comprimé selon l'une quelconque des revendications précédentes, **caractérisée en ce qu'**au moins deux ouvertures d'évacuation (28) sont prévues pour le diaphragme à enroulement (20), lesquelles ouvertures d'évacuation (28) sont circonférentiellement réparties autour de la portion tête centrale (22) du diaphragme à enroulement (20).
